(19) **Europäisches Patentamt / European Patent Office / Office européen des brevets**

(11) **EP 4 488 712 A1**

(12) **DEMANDE DE BREVET EUROPEEN**

(43) Date de publication:
**08.01.2025 Bulletin 2025/02**

(21) Numéro de dépôt: **24186250.7**

(22) Date de dépôt: **03.07.2024**

(51) Classification Internationale des Brevets (IPC):
**G01S 7/41** (2006.01)    **G06V 10/143** (2022.01)
**G06V 20/10** (2022.01)    **G06V 20/17** (2022.01)

(52) Classification Coopérative des Brevets (CPC):
**G01S 7/417; G06V 10/143; G06V 20/10; G06V 20/17; G06V 20/188; G06V 20/194**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **03.07.2023 FR 2307050**

(71) Demandeur: **THALES**
**92190 Meudon (FR)**

(72) Inventeurs:
• **MAZEAU, Thierry**
  **33700 MERIGNAC (FR)**
• **LUTZ, Christophe**
  **92230 GENEVILLIERS (FR)**
• **NICOLAS, Florian**
  **29200 BREST (FR)**

(74) Mandataire: **Lavoix**
  **2, place d'Estienne d'Orves**
  **75441 Paris Cedex 09 (FR)**

(54) **PROCÉDÉ DE LABELLISATION AUTOMATIQUE D'UN SPECTRE RADAR AVEC UN IDENTIFIANT DE LA SURFACE ÉCLAIRÉE PAR LE RADAR ; SYSTÈME ET PROGRAMME D ORDINATEUR ASSOCIÉS**

(57)     La présente invention concerne un procédé (100), mis en oeuvre par ordinateur, de labellisation automatique d'une donnée correspondant à un spectre radar, le spectre radar étant acquis au moyen d'un radar embarqué à bord d'un aéronef et éclairant une surface au sol, en vue d'entraîner un algorithme d'intelligence artificielle d'identification de la surface au sol, le procédé consistant à : acquérir (110) un spectre radar d'un domaine observé par le radar ; obtenir (120, 140), au moyen d'un système de référence, un identifiant vrai d'une surface au sol éclairée par le radar lors de l'acquisition du spectre radar ; et, associer (150), dans une donnée labellisée, la donnée correspondant au spectre radar et l'identifiant vrai obtenu.

FIG.2

EP 4 488 712 A1

**Description**

L'invention a pour domaine technique celui du traitement des spectres radars, notamment pour la reconnaissance, au moyen d'un radar aéroporté, des surfaces éclairées par le radar, qu'il s'agisse d'une surface de mer, d'une surface de terre, d'une surface de lac, d'une surface de rivière, d'une surface sableuse, d'une surface végétale (forêt ou cultures par exemple), etc., ou une combinaison de ces surfaces.

Les traitements radar doivent être adaptés de manière dédiée aux spectres induits par les différentes natures des surfaces au sol éclairées par le radar lors de l'acquisition de ces spectres.

Par exemple, dans le cas de la détection de cibles, les échos réfléchis par la surface au sol éclairée par le radar génèrent un bruit de fond dans le spectre reçu. Or la signature d'une cible dans le spectre reçu doit être extraite de ce bruit de fond.

Dans un autre exemple, éclairer la surface au sol peut permettre de mesurer la vitesse de l'aéronef porteur du radar par effet Doppler. Or ceci est rendu particulièrement difficile lorsque la surface éclairée est une mer très calme, la surface équivalente radar - SER étant alors particulièrement faible.

L'ensemble des échos réfléchis par la surface au sol est dénommé fouillis (ou « clutter » en anglais).

Les caractéristiques du fouillis (niveau, statistique, etc.) sont différentes en fonction de la nature de la surface éclairée par le radar, qu'il s'agisse de terre, de mer, d'un lac, de la végétation, etc.

Les caractéristiques du fouillis permettent alors d'identifier la nature de la surface au sol éclairée.

Dans ce but, des algorithmes d'intelligence artificielle d'identification de la nature de la surface au sol éclairée par le radar à partir du spectre radar sont mis en oeuvre.

Pour l'entraînement de tels algorithmes d'identification, il est nécessaire de constituer une base de données de référence, stockant des spectres labellisés, c'est-à-dire un doublet associant un spectre radar (ou des caractéristiques dérivées du spectre radar) du fouillis et la nature vraie de la surface au sol éclairée lors de l'acquisition de ce spectre (ou un identifiant correspondant à la nature vraie de la surface éclairée).

Cependant, en plus de la nature de la surface éclairée, les caractéristiques du fouillis dépendent des paramètres de vol de l'aéronef, comme sa hauteur, sa vitesse, ou encore des paramètres de fonctionnement du radar, comme ses angles d'observation en site et gisement.

La constitution de la base de données de référence demande alors de nombreuses campagnes de mesures en vol, afin d'enregistrer des spectres variés, puis leur analyse par du personnel expert afin de les labelliser avec la nature vraie de la surface éclairée.

Il y a donc un besoin pour un procédé permettant de construire automatiquement, ou tout au moins avec un minimum d'intervention humaine, une base de données de référence permettant un entraînement et une validation des algorithmes d'identification de la nature des surfaces au sol éclairées par un radar, tout en limitant le nombre de campagnes de mesures en vol nécessaires pour recueillir des spectres nécessaires au peuplement de cette base de données.

Le but de l'invention est de répondre à ce besoin.

Pour cela l'invention a pour objet un procédé, mis en oeuvre par ordinateur, de labellisation automatique d'une donnée correspondant à un spectre radar, le spectre radar étant acquis au moyen d'un radar embarqué à bord d'un aéronef et éclairant une surface au sol, en vue d'entraîner un algorithme d'intelligence artificielle d'identification de la surface au sol, le procédé consistant à : acquérir un spectre radar d'un domaine observé par le radar ; obtenir, au moyen d'un système de référence, un identifiant vrai d'une surface au sol éclairée par le radar lors de l'acquisition du spectre radar ; et, associer, dans une donnée labellisée, la donnée correspondant au spectre radar et l'identifiant vrai obtenu.

Suivant des modes particuliers de réalisation, le procédé comporte une ou plusieurs des caractéristiques suivantes, prises isolément ou suivant toutes les combinaisons techniquement possibles :

- le système de référence comportant au moins un capteur de référence, l'étape d'obtention de l'identifiant vrai consiste à acquérir une image du domaine observé par le radar au moment de l'acquisition du spectre, puis à analyser l'image acquise au moyen d'un algorithme d'intelligence artificielle de classification convenablement entraîné pour déterminer une classe dont relève la surface au sol à partir de l'image acquise, l'identifiant vrai étant égal à la classe ainsi déterminée.
- le système de référence comportant au moins un modèle numérique de terrain de référence, l'étape d'obtention de l'identifiant vrai consiste à déterminer une localisation de la surface au sol éclairée par le radar au moment de l'acquisition du spectre, puis à extraire du modèle numérique de terrain de référence l'identifiant vrai correspondant à la localisation déterminée pour la surface au sol éclairée par le radar.
- le procédé comporte en outre une étape consistant à enregistrer la donnée labellisée dans une base de données d'entraînement, et, à l'issue du peuplement de la base de données d'entraînement, une étape consistant à entraîner et/ou valider, en utilisant des lots de données labellisées de la base de données d'entraînement, l'algorithme d'intelligence artificielle d'identification associant automatiquement, à une donnée correspondant à un spectre radar, un identifiant de la surface au sol éclairée par le radar lors de l'acquisition dudit spectre radar.
- la donnée correspondant à un spectre radar étant un spectre radar brut, le procédé comportant en outre une étape de prétraitement permettant, à partir du spectre radar brut, d'obtenir un spectre radar prétraité, le spectre radar prétraité constituant l'entrée de l'algorithme d'intelligence artificielle d'identification.

- l'étape de prétraitement comporte une étape de normalisation du spectre radar brut de manière à obtenir un spectre radar normalisé.
- l'étape de prétraitement comporte une étape d'extraction d'une ou plusieurs grandeurs(s) intermédiaire(s) du spectre radar, brut ou prétraité, de manière à définir une signature caractéristique de la surface au sol éclairée par le radar, la donnée correspondant au spectre radar étant constituée de ladite signature caractéristique.

L'invention a également pour objet un système pour la mise en oeuvre du procédé précédent et un programme d'ordinateur comportant des instructions logicielles qui, lorsqu'elles sont exécutées par un calculateur du système précédent permettent la mise en oeuvre du procédé précédent.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :

> [Fig 1] La figure 1 est une représentation schématique du système pour la mise en oeuvre du procédé d'identification selon l'invention ; et,
> [Fig 2] La figure 2 est une représentation sous forme de blocs du procédé d'identification selon l'invention.

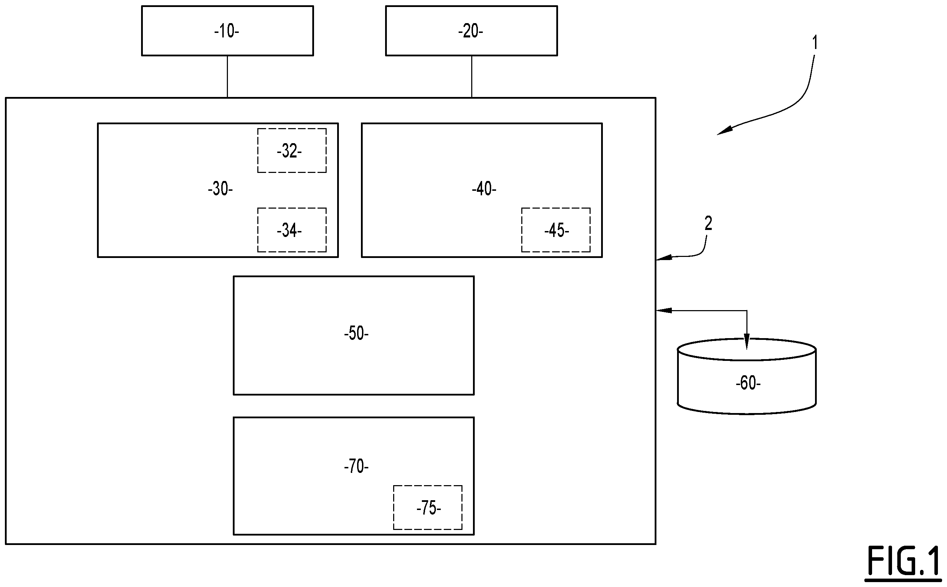

La figure 1 représente un premier mode de réalisation d'un système permettant une labellisation automatique d'un spectre radar avec une étiquette correspondant à la nature vraie de la surface au sol éclairée par le radar lors de l'acquisition de ce spectre.

La donnée ainsi labellisée est enregistrée dans une base de données de référence 60 du système 1.

La base de données de référence 60 a pour but final de permettre l'entraînement et/ou la validation d'un algorithme d'intelligence artificielle - IA d'identification 75, qui, une fois correctement paramétré, est adapté pour identifier automatiquement la nature de la surface au sol éclairée par un radar à partir d'un spectre acquis par ce même radar.

Une donnée labellisée associe :

- une donnée, constituant une entrée de l'algorithme d'identification (en particulier la donnée respecte le format des données attendues en entrée de l'algorithme d'identification 75 à entrainer) ;
- une étiquette correspondant à l'identifiant vrai à associer à cette donnée (en particulier l'étiquette respecte le format des résultats obtenus en sortie de l'algorithme d'identification 75 à entrainer).

Le processus d'entraînement consiste à modifier progressivement les paramètres de l'algorithme 75 à entraîner de manière à ce que l'identifiant estimé par cet algorithme sur la donnée se rapproche de l'identifiant vrai associé à cette donnée dans la donnée labellisée.

Le système 1 est avantageusement embarqué à bord d'un aéronef pour effectuer des campagnes de mesures en vol permettant de peupler dynamiquement la base de données de référence 60.

Le système 1 comporte, outre la base de données de référence 60, un radar 10, au moins un capteur de référence 20, et un ordinateur 2.

Le radar 10 permet, au cours d'une récurrence de fonctionnement, l'acquisition d'un spectre radar. Le spectre radar correspond à l'observation par le radar d'un domaine de l'espace. Pour une observation au sol, ce domaine comporte notamment une surface au sol qui est éclairée par le radar.

Le radar 10 est par exemple un radar du type FMCW.

À chaque récurrence, un radar FMCW émet, pendant une durée d'émission (ou temps d'éclairement), une onde prenant la forme d'une rampe de fréquence, puis reçoit, pendant une durée de réception, une onde reçue résultant de la réflexion de l'onde émise sur des objets réfléchissants présents dans le domaine d'observation du radar, notamment la surface du sol.

Une transformation de Fourier rapide - FFT (« Fast Fourrier Transform ») est réalisée sur les échantillons de l'onde reçue pour chaque récurrence.

Une mesure d'un écart en fréquence entre l'onde émise et l'onde reçue permet de déduire la distance entre l'objet réflecteur et le radar.

Pour cette transformation, l'intervalle en fréquence est subdivisé en N cases en fréquence, avec par exemple N égal à 1024. La résolution fréquentielle de la FFT dépend de la période de récurrence du radar et du nombre de cases. Il peut donc être considéré des cases en fréquence dont la largeur est égale à la résolution fréquentielle de la FFT.

Le spectre radar obtenu à l'issue de la FFT est un spectre amplitude-fréquence. Il est caractéristique de la nature de la surface au sol éclairée par le radar.

Ce spectre s'étale en fréquence proportionnellement à l'ouverture du faisceau du radar et de la hauteur de l'aéronef porteur.

Les données brutes (avant traitement) délivrées par le radar forment donc, dans le cas d'un radar FMCW, une matrice bidimensionnelle avec en abscisse les cases en fréquence (ou en distance) et en ordonnées les amplitudes des signaux.

Le capteur de référence 20 est par exemple un capteur optique, comme une caméra. Il s'agit par exemple d'une caméra fonctionnant dans le visible. En variante, il peut s'agir d'une caméra fonctionnant dans l'infrarouge ou l'ultra-violet.

Le capteur de référence est adapté pour acquérir une image du domaine observé par le radar au moment de l'acquisition d'un spectre. Cette image est une image de la surface au sol éclairée par le radar au moment de l'acquisition du spectre radar.

L'ordinateur 2 est relié d'une part au radar 10 et d'autre part au capteur de référence 20. Dans le mode de réalisation de la figure 1, l'ordinateur 2 est embarqué dans l'aéronef porteur du radar et du capteur de référence. Il peut donc être connecté directement au radar 10 et au capteur de référence 20.

En variante, l'ordinateur 2 est au sol et la communication avec le radar et le capteur de référence s'effectue selon une liaison air adaptée.

L'ordinateur 2 exécute un programme, qui peut être subdivisé en une pluralité de modules fonctionnels.

Le premier module ou module de prétraitement 30, qui est optionnel, est adapté pour traiter le spectre radar acquis par le radar 10 à l'instant courant. Par exemple, le module 30 comporte un sous module 32 adapté pour normaliser le spectre acquis par le radar 10 à l'instant courant, ou spectre brut, de manière à obtenir un spectre normalisé. Par exemple, le module 30 comporte un sous module 34 adapté pour extraire une signature caractéristique de la surface éclairée par le radar à partir du spectre brut ou normalisé.

Le second module ou module de référence 40 est adapté pour exécuter un algorithme d'intelligence artificielle de classification 45, qui est capable de déterminer, à partir de l'information acquise par le capteur de référence 20 à l'instant de l'acquisition du spectre, la classe dont relève la surface au sol éclairée par le radar.

Par exemple, l'algorithme d'intelligence artificielle de classification est adapté pour classer l'image acquise par la capteur optique dans une pluralité de classes prédéterminée. Chaque classe correspond à une nature possible de la surface au sol.

Comme il apparaîtra plus clairement lors de la présentation du procédé selon l'invention, le format des sorties de l'algorithme d'identification 75 contraint celui des sorties de l'algorithme de classification 45 : la pluralité de classes est choisie de telle sorte que chaque identifiant de la pluralité d'identifiants constituant les sorties possibles de l'algorithme d'identification 75 corresponde à au moins une classe de la pluralité de classes constituant les sorties possibles de l'algorithme de classification 45.

Il est à noter que la reconnaissance d'images par algorithme d'intelligence artificielle est maintenant très robuste. Les bases de données d'images pour l'entrainement de tels algorithmes d'intelligence artificielle sont très nombreuses, ce qui permet d'obtenir une base de données d'entraînement conséquente. La confiance sur la classification de la nature des surfaces vues du ciel est donc très bonne, voire excellente.

Le troisième module 50 est adapté pour associer les sorties des premier et second modules 30 et 40 dans une donnée labellisée et, de préférence, stocker cette donnée labellisée dans la base de données d'entrainement 60.

Avantageusement, l'ordinateur 2 comporte un module d'entrainement 70 permettant d'entrainer l'algorithme d'identification 75 à partir de la base de données 60.

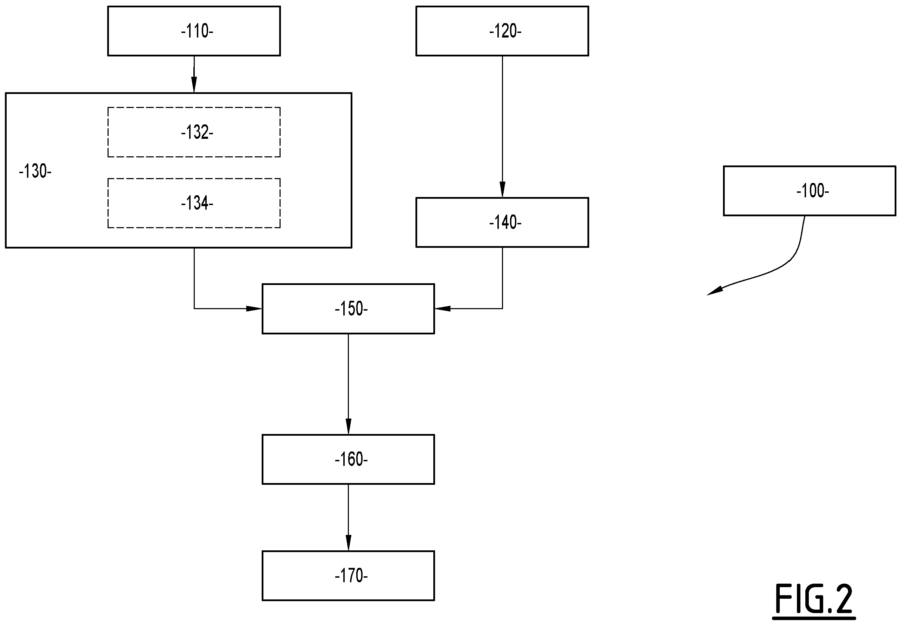

La figure 2 représente un mode de réalisation préféré d'un procédé de labellisation selon l'invention.

Le procédé 100 permet de labelliser automatiquement un spectre radar avec un identifiant vrai relatif à la nature de la surface au sol éclairée par le radar lors de l'acquisition de ce spectre.

Le procédé 100 débute par une étape 110 consistant à acquérir un spectre radar d'un domaine observé par le radar 10.

Le domaine observé présente une surface au sol éclairée par le radar. Eventuellement, le domaine comporte également des cibles, la surface au sol constituant un fond. C'est sur ce fond que les cibles sont à extraire par des traitements radar adaptés. Ces derniers peuvent être optimisés en fonction de la nature de ce fond.

Simultanément, dans l'étape 120, une information de référence est acquise au moyen du capteur de référence 20. Dans le cas d'un capteur optique, l'information de référence est une image du domaine observé par le radar à l'instant courant.

Puis, dans l'étape 140, l'image venant d'être acquise est analysée au moyen d'un algorithme d'intelligence artificielle de classification 45, ayant été préalablement convenablement entraîné.

Cet algorithme de classification est adapté pour déterminer la classe dont relève la surface au sol apparaissant sur l'image acquise. L'algorithme de classification est adapté pour déterminer une classe parmi une pluralité de classes. La pluralité de classes comporte par exemple les classes « terre », «mer », « lac », « végétation », etc. Par exemple encore, la classe mer peut être subdivisée pour tenir compte de l'état de la mer telle qu'identifiée sur l'image, pour obtenir par exemple des classes « mer forte », « mer calme », etc.

Eventuellement, une classe supplémentaire est prévue qui correspond aux images qui n'ont pas pu être classées par l'algorithme dans l'une ou l'autre des classes.

Enfin, le procédé 100 comporte une étape 150 consistante à associer le spectre radar acquis à l'étape 110 avec la classe déterminée à l'étape 140 en tant qu'identifiant vrai de la surface au sol éclairée par le radar. Cette association conduit à un spectre radar labellisé.

Dans une étape 160, le spectre labellisé obtenu à l'étape 150 est enregistré dans la base de données d'entrainement 60 en tant que nouvelle donnée d'entrainement.

Une fois que la base de données d'entrainement 60 est suffisamment peuplée, dans une étape 170, un algorithme d'intelligence artificiel d'identification 75 est entraîné et/ou validé avec des lots de spectres labellisés extraits de la base de données 60.

L'algorithme d'intelligence artificiel d'identification 75 prend en entrée un spectre radar et délivre en sortie un identifiant de la nature de la surface au sol éclairée par le radar lors de l'acquisition de ce spectre radar.

Une fois convenablement entraîné, algorithme d'intelligence artificiel d'identification peut être utilisé pour, à partir d'un spectre radar nouvellement acquis par le radar 10 (ou un radar équivalent), déterminer automatiquement l'identifiant caractérisant la surface au sol éclairée par ce radar. Cet identifiant peut servir à choisir ou optimiser un traitement radar adapté au spectre radar pour y détecter des cibles ou toute autre information utile.

En variante, un ou plusieurs spectres radar nouvellement labellisés, obtenus en sortie de l'étape 150, sont utilisés immédiatement pour l'entraînement de l'algorithme d'intelligence artificielle d'identification 75. Cette variante est particulièrement intéressante pour permettre, suite à un premier entraînement de l'algorithme d'identification 75, une mise à jour des paramètres de cet algorithme 75 afin d'élargir ses capacités d'identification. Il s'agit donc d'un entraînement « en temps réel », par exemple au cours d'un vol opérationnel, par opposition à un entrainement « en temps différé », par exemple suite à une campagne de vol d'acquisition d'enregistrements permettant de peupler la base de données d'entraînement puis de réaliser ensuite l'entrainement de l'algorithme d'identification par exemple au sol sur un autre ordinateur.

Avantageusement, ce n'est pas le spectre radar brut qui constitue l'entrée de l'algorithme d'identification 75 mais un spectre radar normalisé. Cela permet de rendre comparables les spectres appliqués en entrée de l'algorithme d'intelligence artificielle d'identification.

Ainsi, dans cette variante avantageuse, le procédé 100 comporte une étape 130 de prétraitement du spectre radar obtenu en sortie de l'étape 110.

Par exemple, dans une étape 132, le spectre est normalisé. Ce prétraitement consiste à homogénéiser les spectres selon un critère de normalisation pour obtenir un spectre radar normalisé. Cette étape est détaillée à la fin de la présente description.

Par exemple encore, ce n'est pas un spectre radar, brut ou normalisé, qui constitue l'entrée de l'algorithme d'identification, mais un ensemble de grandeurs intermédiaires extraites du spectre radar et permettant de définir une signature caractéristique de la surface au sol éclairée par le radar au moment de l'acquisition du spectre radar.

Ainsi, dans cette variante, l'étape 130 comporte une étape 134 consistant à extraire une ou plusieurs grandeur(s) intermédiaire(s) à partir du spectre radar acquis à l'étape 110. Il peut par exemple s'agir d'une grandeur statistique extraite du spectre, brut ou normalisé, ou encore de grandeurs minimales et maximales en amplitude et/ou fréquence du spectre.

Dans le mode de réalisation préféré, qui a été présenté en détail ci-dessus, le radar est un radar FMCW, permettant d'obtenir une donnée brute prenant la forme d'une matrice 2D.

En variante, le radar est un radar à impulsion. Au cours d'une récurrence, un radar à impulsion émet pendant une période d'émission et reçoit sur une période de réception, segmentée en cases distances de longueurs équivalentes.

Une FFT est réalisée pour chaque case distance sur un bloc de récurrences (comportant par exemple 1024 cases) [notion de bloc de récurrence].

La résolution de la FFT dépend de la période de récurrence et du nombre de points.

Il peut donc être considéré des cases en fréquence de la largeur de la résolution fréquentielle de la FFT.

Les données brutes (avant traitement) forment donc ici une matrice 3D avec en profondeur les cases en distance, en abscisse les cases en fréquence et en ordonnées les amplitudes des signaux.

Pour un radar impulsionnel, le spectre d'intérêt est situé sur une ou plusieurs cases en distance. Il faut donc attendre la fin de l'acquisition sur les N récurrences nécessaires à la FFT, avant de lancer le traitement dédié à la reconnaissance de la nature des surfaces éclairées.

Ceci contrairement au cas d'un radar FMCW, pour lequel les données sont disponibles à la fin de chaque récurrence et présentées en 2D, fréquence et amplitude.

L'algorithme entraîné avec un type de radar ne peut servir pour l'autre type.

L'étape de labellisation et/ou celle d'apprentissage peut être réalisée au cours du vol ou au sol après enregistrement en vol.

Cette apprentissage évite les phénomènes de fuite d'information (ou « data leakage » en anglais) car il ne confronte que les valeurs de sorties des capteurs A et B.

L'homme du métier constatera que le procédé selon l'invention consiste finalement à apprendre à un système radar à identifier la nature de la surface du sol éclairée par le radar, en se fondant sur les résultats d'identification donnés par un autre système de référence, en l'occurrence optique, pris en tant que référence. Ce système de référence est indépendant du radar.

C'est donc un apprentissage supervisé avec des critères issus d'un autre système déjà entraîné. Il y a donc transfert de l'expérience acquise par le système de référence, ou système professeur, vers le système radar, ou système élève.

Le présent procédé présente de nombreux avantages.

Il permet de limiter le nombre de campagnes de mesures en vol nécessaires au peuplement d'une base de données d'entraînement de manière à ce que cette base de données soit suffisamment grande et complète pour conduire à un entraînement satisfaisant de l'algorithme d'intelligence artificielle d'identification.

L'étape de normalisation et/ou d'extraction d'une signature du spectre brut, permet de réduire l'espace des spectres radar, ce qui facilite l'identification et l'entrainement de l'algorithme. Par conséquent, cela permet de réduire encore plus le nombre de campagnes de vol nécessaires au peuplement de la base de données d'entraînement.

L'élaboration des données labellisées s'effectue automatiquement, sans intervention humaine. Le procédé selon l'invention permet de se dispenser d'experts aptes à reconnaître la nature des surfaces vues du ciel à partir des données radar.

Le domaine d'application de l'invention est celui des radars aéroportés ou satellitaires, pour l'observation, la surveillance, etc.

Elle peut également trouver une application pour les radars FMCW utilisés en tant que radioaltimètre. La détermination de la nature de la surface éclairée par le radar permettant par exemple d'en améliorer la précision ou d'augmenter avec des fonctionnalités supplémentaires.

Dans un second mode de réalisation de l'invention, le système de référence, au lieu de mettre en oeuvre un capteur et un algorithme d'intelligence artificielle, est fondé sur l'emploi d'un modèle numérique de terrain de référence.

Plus précisément, au moment de l'acquisition d'un spectre par le radar, la position du porteur (longitude, latitude et altitude - ou hauteur), ainsi que l'angle de site et éventuellement l'ouverture du radar sont relevées. La position du porteur peut par exemple être obtenue par un dispositif de positionnement par satellites embarqué à bord de l'aéronef porteur du système radar.

A partir de ces données, la localisation de la surface au sol éclairée par le radar est déterminée.

Un modèle numérique de terrain de référence est alors utilisé. Celui-ci associer à chaque point du terrain un identifiant indicatif de la nature de la surface du sol en ce point. Il s'agit en quelque sorte d'une base de données topographique.

Ainsi, la localisation de la surface éclairée par le radar permet, en interrogeant le modèle numérique de terrain de référence, d'obtenir un identifiant à associer à la surface au sol éclairée par le radar.

Cet identifiant est utilisé en tant qu'identifiant vrai pour labelliser le spectre acquis et créer une nouvelle entrée dans la base de données d'entrainement.

Ce second mode de réalisation est particulièrement simple à mettre en oeuvre, mais ne peut pas permettre une identification de la nature de la surface au sol, lorsque cette nature correspond à l'état courant de la surface au sol, comme par exemple l'état d'une surface de mer.

Pour cela, il faudrait alors combiner l'information obtenue avec le modèle numérique de terrain, avec une source d'informations météorologiques et/ou marines pour déterminer l'état de la mer et ainsi obtenir un identifiant vrai permettant de distinguer une surface de mer selon ses différents états.

Dans une variante le système radar 20 est embarqué à bord d'un aéronef alors que l'ordinateur 2 et la base de données 60 pour la labellisation automatique des spectres se trouvent au sol. Le système radar transmet les spectres qu'il acquière à l'ordinateur au sol, avec les informations nécessaires, c'est-à-dire la ou les images de la surface au sol éclairée par le radar pour le premier mode de réalisation, et la localisation de l'aéronef et les paramètres d'observation du radar pour le second mode de réalisation. C'est au sol que l'ordinateur traite chaque spectre pour le labelliser. Cette variante est particulièrement bien adaptée au second mode de réalisation où le système de référence utilise un modèle de terrain, qui par conséquent peut être mémorisé par l'ordinateur au sol.

Dans ce qui suit, une manière de réaliser l'étape de normalisation est présentée.

Les amplitudes et l'étalement fréquentiel d'un spectre dépendent généralement de la hauteur $H$ du porteur, de l'angle de site (aussi dénommé angle d'élévation) $\alpha$ du faisceau, et de l'ouverture $\Theta$ du faisceau.

Pour le cas particulier d'un radar FMCW, pour lequel le faisceau présente une orientation fixe et une ouverture prédéfinie, les caractéristiques d'un spectre ne dépendent plus que de la hauteur.

Dans l'absolue, il faudrait enregistrer dans la base de données des spectres pour différentes configurations, c'est-à-dire plusieurs hauteurs, plusieurs angles de site et plusieurs ouvertures. Mais cette solution nécessiterait alors d'acquérir un grand nombre de spectres et, en conséquence, augmenterait le nombre nécessaire de campagnes de mesures en vol.

Il est donc préférable que l'identification se fasse sur des spectres normalisés plutôt que bruts.

Pour une ouverture antenne et un site faisceau fixés, plus la hauteur est importante, plus le spectre est étalé (à cause de l'augmentation des distances) et plus les amplitudes sont faibles.

La normalisation consiste alors à rapporter les différents spectres bruts sur les mêmes échelles en amplitudes et en fréquences. Les échelles sont par exemple celles d'un spectre de calibration.

Pour normaliser un spectre brut selon l'axe des fréquences, on compense son étalement spectrale $E_S$.

On montre que l'étalement spectrale s'écrit, en fonction de la hauteur, de l'angle de site et de l'ouverture :

$$E_S = 2.K.H.\left(\frac{1}{\cos\left(\alpha + \frac{\Theta}{2}\right)} - \frac{1}{\cos\left(\alpha + \frac{\Theta}{2}\right)}\right)$$

avec K un coefficient égale au rapport de la bande de fréquence émise sur la période de récurrence, *H* la hauteur, $\alpha$ l'angle de site et $\Theta$ l'ouverture du faisceau

La première étape consiste donc à normaliser le spectre brut selon l'axe des fréquences en appliquant un facteur d'échelle $E_{S0}/E_S$, où $E_S$ est l'étalement spectrale du spectre brut et $E_{S0}$ est l'étalement spectrale du spectre de calibration.

La seconde étape consiste à ajuster les amplitudes du spectre brut selon l'axe des amplitudes en appliquant un facteur d'échelle $\dfrac{A0}{A}$, où A est l'amplitude maximale du spectre brut et A0 l'amplitude maximale du spectre de calibration.

Dans une troisième étape, le spectre normalisé est obtenu en prenant un échantillon sur R, avec $R = \dfrac{D}{D_0}$, où D est la fréquence maximale du spectre brut et D0 la fréquence maximale du spectre de calibration.

## Revendications

1. Procédé (100), mis en oeuvre par ordinateur, de labellisation automatique d'une donnée correspondant à un spectre radar, le spectre radar étant acquis au moyen d'un radar (10) embarqué à bord d'un aéronef et éclairant une surface au sol, en vue d'entraîner un algorithme d'intelligence artificielle d'identification (75) de la surface au sol, le procédé consistant à :

   - acquérir (110) un spectre radar d'un domaine observé par le radar ;
   - obtenir, au moyen d'un système de référence, un identifiant vrai d'une surface au sol éclairée par le radar lors de l'acquisition du spectre radar ; et,
   - associer (150), dans une donnée labellisée, la donnée correspondant au spectre radar et l'identifiant vrai obtenu.

2. Procédé selon la revendication 1, dans lequel, le système de référence comportant au moins un capteur de référence, l'étape d'obtention de l'identifiant vrai consiste à acquérir une image du domaine observé par le radar au moment de l'acquisition du spectre, puis à analyser (140) l'image acquise au moyen d'un algorithme d'intelligence artificielle de classification (45) convenablement entraîné pour déterminer une classe dont relève la surface au sol à partir de l'image acquise, l'identifiant vrai étant égal à la classe ainsi déterminée.

3. Procédé selon la revendication 1, dans lequel, le système de référence comportant au moins un modèle numérique de terrain de référence, l'étape d'obtention de l'identifiant vrai consiste à déterminer une localisation de la surface au sol éclairée par le radar au moment de l'acquisition du spectre, puis à extraire du modèle numérique de terrain de référence l'identifiant vrai correspondant à la localisation déterminée pour la surface au sol éclairée par le radar.

4. Procédé selon l'une quelconque des revendications 1 à 3, comportant en outre une étape (160) consistant à enregistrer la donnée labellisée dans une base de données d'entraînement (60), et, à l'issue du peuplement de la base de données d'entraînement (60), une étape (170) consistant à entraîner et/ou valider, en utilisant des lots de données labellisées de la base de données d'entraînement (60), l'algorithme d'intelligence artificielle d'identification (75) associant automatiquement, à une donnée correspondant à un spectre radar, un identifiant de la surface au sol éclairée par le radar lors de l'acquisition dudit spectre radar.

5. Procédé selon l'une quelconque des revendications 1 à 4, dans lequel la donnée correspondant à un spectre radar étant un spectre radar brut, le procédé comportant en outre une étape (130) de prétraitement permettant, à partir du spectre radar brut, d'obtenir un spectre radar prétraité, le spectre radar prétraité constituant l'entrée de l'algorithme d'intelligence artificielle d'identification.

6. Procédé selon la revendication 5, dans lequel l'étape de prétraitement comporte une étape (132) de normalisation du spectre radar brut de manière à obtenir un spectre radar normalisé.

7. Procédé selon l'une quelconque des revendications 5 à 6, dans lequel l'étape de prétraitement comporte une étape (134) d'extraction d'une ou plusieurs grandeurs(s) intermédiaire(s) du spectre radar, brut ou prétraité, de manière à définir une signature caractéristique de la surface au sol éclairée par le radar, la donnée correspondant au spectre radar étant constituée de ladite signature caractéristique.

8. Système (1) pour la mise en oeuvre d'un procédé (100) selon l'une quelconque des revendications 1 à 7, le système comportant un radar (10) et un système de référence (20).

9. Programme d'ordinateur comportant des instructions logicielles qui, lorsqu'elles sont exécutées par un ordinateur (2) d'un système conforme à la revendication 8, mettent en oeuvre un procédé (100) selon l'une quelconque des revendications 1 à 7.

FIG.1

FIG.2

Europäisches Patentamt

European Patent Office

Office européen des brevets

**RAPPORT DE RECHERCHE EUROPEENNE**

Numéro de la demande

EP 24 18 6250

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2022/092854 A1 (NUSSBAUM BRYAN [US] ET AL) 24 mars 2022 (2022-03-24) * abrégé; figures 1-3 * * alinéas [0046] - [0047], [0054], [0107], [0178] - [0181], [0186] - [0188] * | 1-9 | INV. G01S7/41 G06V10/143 G06V20/10 G06V20/17 |
| | - - - - - | | |
| A | US 2020/103499 A1 (PREECE DAVID [US] ET AL) 2 avril 2020 (2020-04-02) * abrégé; figure 13 * * alinéa [0120] * | 1-9 | |
| | - - - - - | | |
| A | CN 111 323 764 A (UNIV SHANDONG) 23 juin 2020 (2020-06-23) * abrégé; figures 8, 9 * * alinéas [0030], [0049] - [0065], [0067] - [0076] * | 1-9 | |
| | - - - - - | | |

**DOMAINES TECHNIQUES RECHERCHES (IPC)**

G01S
G06V

Le présent rapport a été établi pour toutes les revendications

| Lieu de la recherche | Date d'achèvement de la recherche | Examinateur |
|---|---|---|
| Munich | 22 octobre 2024 | Cordeiro, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 18 6250

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-10-2024

| Document brevet cité au rapport de recherche | Date de publication | Membre(s) de la famille de brevet(s) | Date de publication |
|---|---|---|---|
| US 2022092854 A1 | 24-03-2022 | US 11210851 B1 | 28-12-2021 |
| | | US 2022092854 A1 | 24-03-2022 |
| US 2020103499 A1 | 02-04-2020 | JP 2022502663 A | 11-01-2022 |
| | | US 2020103499 A1 | 02-04-2020 |
| | | WO 2020072522 A1 | 09-04-2020 |
| CN 111323764 A | 23-06-2020 | AUCUN | |

Pour tout renseignement concernant cette annexe : voir Journal Officiel de l'Office européen des brevets, No.12/82

EPO FORM P0460